# EUROPÄISCHE PATENTSCHRIFT

(11) **EP 0 965 108 B1**
(45) Veröffentlichungstag und Bekanntmachung des Hinweises auf die Patenterteilung: **31.10.2007**
(21) Anmeldenummer: 98920476.3
(22) Anmeldetag: 05.03.1998
(51) Int. Cl.: G07F 7/10

(54) **Datenträger**
Data carrier
Support de données

(30) Priorität: 06.03.1997 DE 19709276
(43) Veröffentlichungstag der Anmeldung: 22.12.1999
(73) Patentinhaber: Deutsche Telekom AG, 53113 Bonn (DE)
(72) Erfinder: HARTLEIF, Siegfried, D-64823 Gross-Umstadt (DE); SCHAEFER-LORINSER, Frank, D-64372 Ober-Ramstadt (DE)
(74) Vertreter: Katscher Habermann Patentanwälte
(86) Internationale Anmeldenummer: PCT/EP1998/001271
(87) Internationale Veröffentlichungsnummer: WO 1998/039746

(56) Entgegenhaltungen:
- EP-A- 0 337 794
- EP-A- 0 380 377
- EP-A- 0 628 928
- EP-A- 0 671 712
- EP-A- 0 713 188
- FR-A- 2 589 268
- GB-A- 2 261 973

## Beschreibung

Die Erfindung betrifft einen Datenträger, der zum Speichern von Berechtigungen in Berechtigungsdatensätzen ausgebildet ist.

Im täglichen Leben werden häufig Berechtigungen erworben, die in Papierform dokumentiert werden. Beispiele dafür sind die Berechtigung zur Benutzung von Verkehrsmitteln in Form von Fahrscheinen und Zeitkarten, die Benutzung von Parkplätzen in Form von Parkscheinen. Ferner sind in diesem Zusammenhang Eintrittskarten für kulturelle oder sportliche Veranstaltungen, Schwimmbäder, Museen und andere Einrichtungen zu nennen. In den meisten Fällen wird ein solcher Beleg lediglich zu Kontrollzwecken verwendet, der vom Kunden nach Gebrauch fortgeworfen wird. Einige dieser Belege sind so klein, daß sie leicht verlorengehen können. Bei manchen Gelegenheiten, beispielsweise auf Reisen, werden verschiedene Belege mitgeführt, so daß bei einer Kontrolle die Suche nach dem richtigen Beleg Schwierigkeiten bereiten kann.

Zur Vermeidung dieser Nachteile sind Verfahren zum Erwerb sowie zum Abspeichern von Berechtigungen auf Chipkarten bekanntgeworden, beispielsweise aus DE 195 22 050 A1 und EP 0 713 188 A1, wobei die Berechtigungsdatensätze auch die Gültigkeitsdauer der Berechtigung enthalten und ggf. auch für Mehrfachberechtigungen nützbar sind. Durch EP 0 380 377 A1 und durch EP 0 628 928 A1 ist die Speicherung des Anfangs- und des Enddatums einer Berechtigung bekannt.

Eine Chipkarte kann aus Gründen des endlichen Speicherplatzes nur eine endliche Zahl von Berechtigungsdatensätzen aufnehmen. Ist der Speicher voll, kann eine neue Berechtigung nur erworben werden, wenn ein anderer möglichst nicht mehr gültiger Berechtigungsdatensatz überschrieben wird. Stellt die Berechtigung beispielsweise einen Fahrschein dar, der bei Antritt der Fahrt entwertet werden muß, darf dieser Berechtigungsdatensatz jedoch nicht unmittelbar danach gelöscht werden, da er für Kontrollen während der Fahrt erhalten bleiben muß. Wird ein Tagesausweis beispielsweise eine Woche vor dem eigentlichen Gebrauch gekauft und am Tage X entwertet, so verliert er seine Gültigkeit erst mit dem Ablauf dieses Tages. Es ist daher zu gewährleisten, daß dieser Berechtigungsdatensatz bis zum Ablauf seiner Gültigkeit nicht überschrieben wird. Dieses Problem tritt insbesondere bei Mehrfachberechtigungen auf.

Aufgabe der vorliegenden Erfindung ist es daher, im Sinne einer vorteilhaften Verwaltung des zur Verfügung stehenden Speicherplatzes eindeutig festzulegen, welche Berechtigungsdatensätze überschrieben werden können.

Diese Aufgabe wird erfindungsgemäß dadurch gelöst, daß die Berechtigungsdatensätze jeweils ein Datenfeld für eine Startzeit, ein Datenfeld für eine Gültigkeitszeit und ein Datenfeld für eine Loschzeit aufweisen und daß ein in einem Prozessor des Datenträgers wirksames Programm verhindert, daß der Berechtigungsdatensatz vor Erreichen der Löschzeit überschrieben wird.

Die Startzeit und die Löschzeit können je nach Voraussetzungen im einzelnen von der die Berechtigung erteilenden Organisation (Verkehrsunternehmen, Sportstättenbetreiber) genutzt werden. So kann beispielsweise die Löschzeit derart gewählt werden, daß ein Löschen bzw. Überschreiben vor möglichen Kontrollen nicht erfolgt. Wird eine zeitlich begrenzte Berechtigung, beispielsweise ein Tagesfahrschein für ein Verkehrsunternehmen, zu einem Zeitpunkt X erworben, der seine Gültigkeit als Fahrschein erst durch eine Entwertung erhält, darf diese Gültigkeit erst nach Ende eines Zeitraumes Y nach der Entwertung erlöschen. In diesem Fall wird bei dem erfindungsgemäßen Datenträger bei der Entwertung die Löschzeit in den Berechtigungsdatensatz eingetragen.

Um eine unrechtmäßige Verlängerung- der Gültigkeitsdauer zu verhindern, kann gemäß einer Weiterbildung des erfindungsgemäßen Datenträgers vorgesehen sein, daß ein in einem Prozessor des Datenträgers wirksames Programm verhindert, daß eine gespeicherte Löschzeit nicht auf einen späteren Zeitpunkt geändert werden kann.

In den bekannten Chipkarten nach der obengenannten Normung sind jeweils Zugangsbedingungen (access conditions) für gesamte Elementardateien (EF = Elementary Field), nicht jedoch für einzelne Datenfelder festgelegt. Die Zugangsbedingungen regeln, unter welchen sicherheitstechnischen Bedingungen auf das EF zugegriffen werden kann. Über die Einhaltung der Zugangsbedingungen wacht das Betriebssystem der Chipkarte, das heißt: werden Änderungen in einem Berechtigungsdatensatz zugelassen, können diese an jeder beliebigen Stelle der die Berechtigungsdaten enthaltenen EF vorgenommen werden.

Aus Sicherheitsgründen ist eine Anwendung derartiger Sperren auch bei dem erfindungsgemäßen Datenträger angezeigt, wobei jedoch gemäß einer Weiterbildung vorgesehen ist, daß ein in einem Prozessor des Datenträgers wirksames Programm das Eintragen einer Startzeit in einen bereits gespeicherten Berechtigungsdatensatz ermöglicht und/oder daß das Programm ferner eine Änderung der Löschzeit auf einen früheren Zeitpunkt ermöglicht. Zur fortschreitenden Entwertung der einzelnen Berechtigungen, ohne daß ein Mißbrauch der Heraufsetzung der noch verbleibenden Berechtigungen möglich ist, kann bei der Erfindung vorzugsweise vorgesehen sein, daß ein Berechtigungsdatensatz ein Datenfeld für Mehrfachberechtigungen mit der Zahl der noch verbleibenden Berechtigungen enthält und daß ein in einem Prozessor des Datenträgers wirksames Programm die Zahl dekrementieren, jedoch nicht inkrementieren kann.

Eine andere Weiterbildung des erfindungsgemäßen Datenträgers besteht darin, daß die Löschzeit bei Speicherung des Berechtigungsdatensatzes auf ein extrem fernes Datum gesetzt und nach Ablauf der Gültigkeit der letzten Mehrfachberechtigung auf eine vorgegebene Löschzeit zurückgesetzt wird. Damit wird verhindert, daß ein Berechtigungsdatensatz, dessen Löschzeit noch nicht feststeht, gelöscht wird.

Die Erfindung läßt zahlreiche Ausführungsformen zu. Eine davon wird in der Zeichnung anhand mehrerer Figuren erläutert und nachfolgend beschrieben. Es zeigt:
- Fig. 1: den allgemeinen Aufbau eines Berechtigungsdatensatzes,
- Fig. 2: einen Berechtigungsdatensatz mit unbegrenzter Gültigkeit,
- Fig. 3: einen Berechtigungsdatensatz mit begrenzter Gültigkeit,
- Fig. 4: einen Berechtigungsdatensatz, welcher erst nach dem Erwerb durch einen weiteren Vorgang gültig wird,
- Fig. 5.: einen Berechtigungsdatensatz für eine Mehrfachberechtigung gemäß der Erfindung und
- Fig. 6.: eine schematische Darstellung eines Terminals mit einem Sicherheitsmodul und einer Chipkarte.

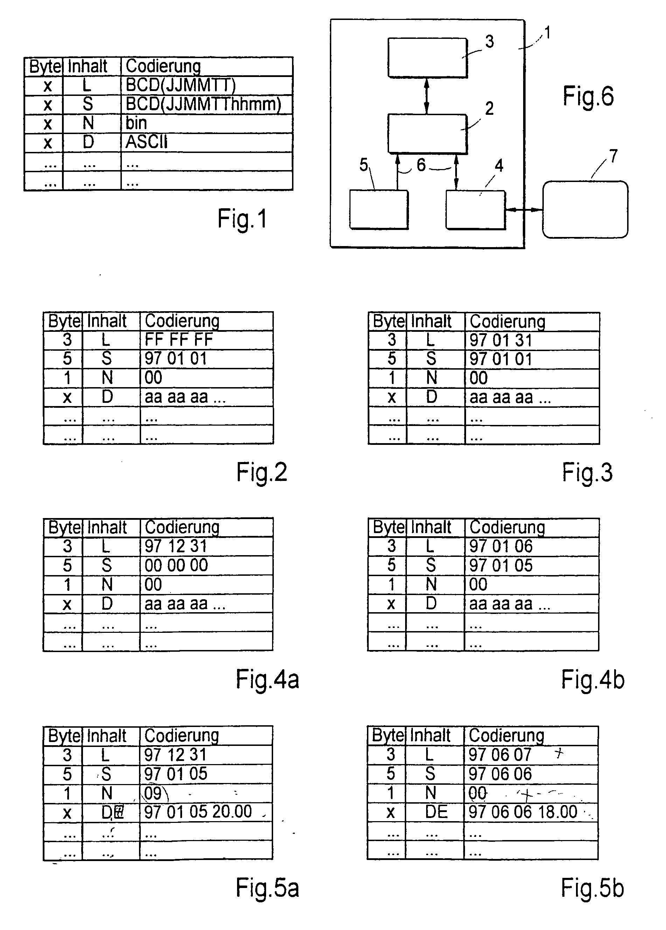

Fig. 1 zeigt den allgemeinen Aufbau eines Berechtigungsdatensatzes. Und zwar enthält der Berechtigungsdatensatz mehrere Datenfelder, deren Länge allgemein in Fig. 1 mit x Bytes angegeben ist. Die Datenfeldinhalte sind die Löschzeit L, die Startzeit S, eine Kennung der Mehrfachnutzung N und ein Datenfeld D für sonstige Informationen. Weitere Datenfelder sind im Zusammenhang mit der vorliegenden Erfindung nicht von Bedeutung und daher in den Figuren nur angedeutet. Die Löschzeit und die Startzeit sind binär-dezimal codiert und erhalten ein Datum in der Form (JJMMTT) oder für den Fall, daß der jeweilige Anwendungfall auch die Speicherung der Uhrzeit erfordert in der Form (JJMMTThhmm). Die Mehrfachnutzung ist in einfacher Weise binär codiert, während die sonstigen Informationen D häufig schriftliche Angaben, beispielsweise ein Fahrtziel, enthalten und dementsprechend als ASCII-Zeichen dargestellt sind.

Bei den in den Figuren 2 bis 4 dargestellten Beispielen für Berechtigungsdatensätze in allgemeiner Form sind für die Löschzeit 3 Byte, für die Startzeit 5 Byte und für die Mehrfachnutzung 1 Byte vorgesehen. Beim Erwerb der Berechtigung wird der jeweils dargestellte Berechtigungsdatensatz angelegt. Im Falle des Beispiels nach Fig. 2 soll die Berechtigung mit dem Erwerb für eine unbegrenzte Zeit gültig sein. Deshalb ist als Löschzeit die größtmögliche Zahl, nämlich FF FF FF eingegeben und als Startzeit der Tag des Erwerbs, nämlich der 1. Januar 1997 im dargestellten Beispiel. Der Prozessor in der Chipkarte und die zur Benutzung der Chipkarte vorgesehenen Endgeräte (Terminals) sind derart programmiert, daß ein Berechtigungsdatensatz mit diesem Löschdatum niemals überschrieben werden darf.

Häufig sind Berechtigungen nur eine begrenzte Zeit gültig, beispielsweise eine Monatskarte eines Verkehrsbetriebes. Ein solches Beispiel ist in Fig. 3 dargestellt, bei dem als Startzeit der erste Tag eines Monats und als Löschzeit der letzte Tag eines Monats eingetragen ist. Der Prozessor in der Chipkarte und gegebenenfalls auch das Terminal sind derart programmiert, daß der Berechtigungsdatensatz erst nach Ablauf des Löschdatums überschrieben werden darf.

Bei anderen Berechtigungen beginnt die Gültigkeit noch nicht durch den Erwerb, sondern erst durch einen weiteren Vorgang, beispielsweise durch die Entwertung eines Fahrscheins bei Fahrtantritt. Dann steht auch erst der Ablauf des Gültigkeitszeitraumes fest. Dies wird anhand von Fig. 4 erläutert, wobei Fig. 4a den Datensatz einer im voraus erworbenen Berechtigung zeigt, die jedoch noch nicht gültig ist - das heißt, beispielsweise als Fahrschein nutzbar ist. Beim Erwerb der Berechtigung wird als Löschzeit ein relativ fernliegendes Datum eingetragen, zu dem die Berechtigung unabhängig von ihrer Verwendung auf jeden Fall erlischt. In diesem Fall ist das Ende des Jahres 1997 eingetragen. Als Startzeit ist 00 00 00 gespeichert, um zu zeigen, daß noch keine gültige Startzeit vorliegt.

Fig. 4b zeigt die erworbene Berechtigung nach dem sogenannten Entwerten, was bei dem dargestellten Beispiel am 05.01.97 erfolgt ist. Die Berechtigungsdauer erstreckt sich von diesem Tag auf den folgenden, so daß als Löschdatum der 06.01.97 eingetragen ist. Nach diesem Datum kann der Berechtigungsdatensatz überschrieben werden.

Fig. 5 zeigt einen Berechtigungsdatensatz für eine Mehrfachberechtigung gemäß der Erfindung am Beispiel einer Zehnerkarte nach der ersten Nutzung (Fig. 5a) und nach der letzten Nutzung (Fig. 5b). Beim Erwerb der Mehrfachberechtigung zu einer aus den Figuren 5a und 5b nicht ersichtlichen Zeit wird die Löschzeit zunächst auf einen fernen Zeitpunkt gesetzt, zu dem die Berechtigung auch ohne Benutzung ablaufen würde. Wird die Zehnerkarte benutzt, so wird jeweils das Datum der Benutzung als Starttermin eingetragen - bei der ersten Benutzung gemäß Fig. 5a also der 5. Januar 1997. In dem Datenfeld zur Mehrfachnutzung N wird der bei dem Erwerb eingetragene Wert von 10 in 09 geändert. Die erste von zehn Mehrfachberechtigungen wird somit gültig. Die Löschzeit wird nicht geändert. Ein Ende der Gültigkeit der ersten der Mehrfachberechtigungen ist im weiteren Datenfeld DE mit Datum und Uhrzeit eingetragen - der 5. Januar 1997 um 20 Uhr.

Erst mit dem Eintrag der Startzeit für die letzte der zehn Mehrfachberechtigungen (Fig. 5b) läßt sich auch die Gesamtgültigkeit der Mehrfachberechtigung ermitteln. Sie endet mit dem Ablauf des Gültigkeitszeitraumes der letzten Mehrfachberechtigung und wird als Löschdatum eingetragen. Erst danach kann der Mehrfach-Berechtigungsdatensatz überschrieben werden.

Das Blockschaltbild gemäß Fig. 6 umfaßt ein Terminal 1, das einen Prozessor 2, ein Sicherheitsmodul 3 und ein Karten-Schreib- und Lesegerät 4 enthält. Ferner ist eine Tastatur 5 vorgesehen für Eingaben durch einen Benutzer, falls solche erforderlich sind. Das Sicherheitsmodul 3 ist derart gestaltet, daß Daten- und Programmänderungen sowie ein Auslesen von Programmen und Daten nicht möglich sind. Die einzelnen Baugruppen des Terminals 1 sind durch Datenleitungen 6 miteinander verbunden. In das Schreib- und Lesegerät 4 kann eine Chipkarte 7 eingeführt werden.

## Patentansprüche

1. Datenträger, der zum Speichern von Mehrfachberechtigungen in Berechtigungsdatensätzen ausgebildet ist, **dadurch gekennzeichnet, daß** die Berechtigungsdatensätze jeweils ein Datenfeld für eine Startzeit (S) ein Datenfeld für eine Gültigkeitszeit und ein Dafenfeld für eine Löschzeit (L) aufweisen und **daß** ein in einem Prozessor des Datenträgers wirksames Programm verhindert, daß der Berechtigungsdatensatz vor Erreichen der Löschzeit (L) überschrieben wird.

2. Datenträger nach Anspruch 1, **dadurch gekennzeichnet, daß** ein in einem Prozessor des Datenträgers wirksames Programm verhindert, daß eine gespeicherte Löschzeit (L) auf einen späteren Zeitpunkt geändert werden kann.

3. Datenträger nach einem der vorhergehenden Ansprüche, **dadurch gekennzeichnet, daß** ein in einem Prozessor des Datenträgers wirksames Programm das Eintragen einer Startzeit (S) in einen bereits gespeicherten Berechtigungsdatensatz ermöglicht.

4. Datenträger nach Anspruch 3, **dadurch gekennzeichnet, daß** das Programm ferner eine Änderung der Löschzeit (L) auf einen früheren Zeitpunkt ermöglicht.

5. Datenträger nach einem der vorhergehenden, Ansprüche, **dadurch gekennzeichnet, daß** ein Berechtigungsdatensatz ein Datenfeld für Mehrfachberechtigungen mit der Zahl (N) der noch verbleibenden Berechtigungen enthält und daß ein in einem Prozessor des Datenträgers wirksames Programm die Zahl (N) dekrementieren, jedoch nicht inkrementieren kann.

6. Datenträger nach einem der vorhergehenden Ansprüche, **dadurch gekennzeichnet, daß** die Löschzeit (L) bei Speicherung des Berechtigungsdatensatzes auf ein extrem fernes Datum gesetzt und nach Ablauf der Gültigkeit der letzten Mehrfachberechtigung auf eine vorgegebene Löschzeit (L) zurückgesetzt wird.

## Claims

1. Data carrier that is designed for storing multiple authorizations in authorization data records, **characterized in that** the authorization data records each have a data field for a start time (S), a data field for a validity time, and a data field for an erasure time (L), and **in that** a program operating in a processor of the data carrier prevents the authorization data record from being overwritten before the erasure time (L) is reached.

2. Data carrier according to claim 1, **characterized in that** a program operating in a processor of the data carrier prevents a stored erasure time (L) from being changeable to a later time.

3. Data carrier according to any one of the preceding claims, **characterized in that** a program operating in a processor of the data carrier permits the entry of a start time (S) in an already-stored authorization data record.

4. Data carrier according to claim 3, **characterized in that** the program further allows changing of the erasure time (L) to an earlier time.

5. Data carrier according to any one of the preceding claims, **characterized in that** an authorization data record has a data field for multiple authorizations with the number (N) of remaining authorizations, and **in that** a program operating in a processor of the data carrier can decrement but not increment the number (N).

6. Data carrier according to any one of the preceding claims, **characterized in that** the erasure time (L) is set to an extremely distant date upon storage of the authorization data record, and is reset to a predefined erasure time (L) once the validity of the last multiple authorization has expired.

## Revendications

1. Support de données conçu pour le stockage d'autorisations multiples dans des ensembles de données d'autorisation, **caractérisé en ce que** les ensembles de données d'autorisation comprennent chacun un champ de données destiné à une date de départ (S), un champ de données destiné à une date de validité et un champ de données destiné à une date d'effacement (L), et **en ce qu'**un programme opérant au sein d'un processeur du support de données empêche l'écrasement de l'ensemble de données d'autorisation avant que la date d'effacement (L) soit atteinte.

2. Support de données selon la revendication 1, **caractérisé en ce qu'**un programme opérant au sein d'un processeur du support de données empêche qu'une date d'effacement (L) stockée puisse être différée à une date ultérieure.

3. Support de données selon l'une des revendications précédentes, **caractérisé en ce qu'**un programme opérant au sein d'un processeur du support de données permet d'écrire une date de départ (S) dans un ensemble de données d'autorisation déjà stocké.

4. Support de données selon la revendication 3, **caractérisé en ce que** le programme permet en outre d'avancer la date d'effacement (L) à une date antérieure.

5. Support de données selon l'une des revendications précédentes, **caractérisé en ce qu'**un ensemble de données d'autorisation comporte un champ de données d'autorisations multiples contenant le nombre (N) des autorisations restantes et **en ce qu'**un programme opérant au sein d'un processeur du support de données est apte à décrémenter le nombre (N), mais pas à l'incrémenter.

6. Support de données selon l'une des revendications précédentes, **caractérisé en ce que**, lors du stockage de l'ensemble de données d'autorisation, la date d'effacement (L) est programmée à une date extrêmement éloignée et remise à une date d'effacement (L) prédéfinie après expiration de la validité de la dernière autorisation multiple.
